# FASCICULE DE BREVET EUROPEEN

(11) **EP 0 815 172 B1**
(45) Date de publication et mention de la délivrance du brevet: **09.08.2000**
(21) Numéro de dépôt: 96909195.8
(22) Date de dépôt: 25.03.1996
(51) Int. Cl.: C08L 101/00

(54) **SYSTEME DE COMPATIBILISATION DE POLYMERES IMMISCIBLES**
KOMPATIBILISIERUNGSSYSTEM VON UNVERMISCHBAREN POLYMEREN
IMMISCIBLE POLYMER COMPATIBILISER SYSTEM

(30) Priorité: 24.03.1995 FR 9503498
(43) Date de publication de la demande: 07.01.1998
(73) Titulaire: ELF ATOCHEM S.A., 92800 Puteaux, Hauts-de-Seine (FR)
(72) Inventeur: BUSSI, Philippe, 4, Chemin de la Planquette, 27300 Bernay (FR)
(74) Mandataire: Neel, Henry
(86) Numéro de dépôt international: FR9600443
(87) Numéro de publication internationale: WO9630447

(56) Documents cités:
- EP-A- 0 585 778

## Description

L'invention a pour objet des associations de polymères immiscibles grâce à l'emploi d'agent compatibilisant, également appelé émulgateur.

La littérature de ces dernières années a longuement exposé aussi bien l'intérêt des associations de polymères que les problèmes posés par l'emploi de polymères immiscibles entre eux et les solutions apportées par les compatibilisants.

D'une manière générale, ces compatibilisants sont eux-mêmes constitués par des polymères, homo ou copolymères, porteurs de sites ou de groupements permettant l'adhésion aux polymères à associer, ces groupements étant en général soit directement incorporés dans la chaîne par polymérisation soit fixés chimiquement sur ces polymères compatibilisants (réaction chimique entre sites fonctionnels, copolymérisation, greffage).

A titre purement illustratif de tels compatibilisants, on peut citer les copolymères blocs de polystyrène et de polycaprolactone (Henschen et Teyssie-Polymer-Vol. 31 Aug. 1990 pp 1473-80); le polypropylène greffé polycaprolactone puis, après hydrolyse, modifié par l'ε-caprolactone (Chung-Macromolécules Vol. 27 - 1994 pp. 1313-19); les copolymères styrène / anhydride maléique / dérivés insaturés modifiés par de la caprolactone (JP-A-03.052.952) ; l'ε-polycaprolactone greffé anhydride maléique (JP-A-03.188.160).

D'autres compatibilisants sont constitués par exemple par des polyoléfines modifiées par un acide carboxylique non saturé (FR-A-2.107.538); des copolymères d'une oléfine ou de styrène et d'un acide mono ou dicarboxylique non saturé ou un ester ou un anhydride de cet acide (FR-A-2.200.321), un copolymère greffé constitué d'au moins un oligomère monoaminé de polyamide et d'un polymère ou copolymère d'a-monoolefine greffé par un monomère pouvant réagir avec la fonction amine de l'oligomère (FR-A-2.626.090) ; un copolymère di ou triséquencé constitué d'au moins un télomère de N-vinylpyrrolidone ou de méthacrylate de méthyle et d'un oligomère mono- ou difonctionnel polymérisable éthyléniquement insaturé ou d'un monomère polycondensable ou d'un lactame (FR-A-2.616.151) ; un copolymère séquencé de polyméthacrylate de méthyle et de polycarbonate (US-A-4.319.003).

La demande de brevet EP-A-585 778 décrit des compositions de polymères contenant un mélange de polymères A, B, C, D dont les polymères B et C sont compatibles avec le polymère A, ce dernier étant un polycarbonate ou un polyestercarbonate.

D'une manière générale, ces agents compatibilisants ont une structure chimique telle qu'elle permette une miscibilité au moins partielle de cet agent avec les polymères à compatibiliser.

L'obtention de cette structure chimique et l'implantation de sites favorisant cette miscibilité au moins partielle sur le même squelette polymère (souvent appelé polymère ou co-polymère-tronc) requiert le plus souvent un ensemble de réactions chimiques complexes et d'autant plus onéreux que la structure chimique d'un tel agent doit être strictement adaptée à la nature des polymères à associer. Ainsi, d'une manière générale, un agent compatibilisant pour le couple polyamide/polypropylène ne remplira pas la même fonction de compatibilisation avec le couple PVDF/polyoléfine.

L'invention a donc pour premier objet de proposer un système simple de compatibilisation de polymères immiscibles.

L'invention a également pour objet de proposer un système de compatibilisation ne nécessitant pas l'emploi d'un agent de compatibilisation spécialement préparé pour associer ces polymères.

L'invention propose également l'emploi d'un système facilement interchangeable en fonction de la nature des polymères à associer.

D'autres avantages de l'invention apparaîtront à la lecture de ce qui suit.

L'invention a donc pour objet une composition comprenant deux polymères A et B thermoplastiques immiscibles l'un avec l'autre et un mélange de deux polymères thermoplastiques C et D, chacun de ces polymères C et D étant individuellement au moins partiellement miscible avec l'un des polymères A et B, caractérisée en ce que les polymères A et B sont choisis dans le premier groupe comprenant les couples suivants :
- polyéthylène (PE) / polyamide (PA)
- polyéthylène / polyisobutène
- polypropylène (PP) / autre polyoléfine
- PP / PA
- polychlorure de vinyle (PVC) / polyoléfine
- poly(acrylonitrile / butadiène / styrène) (ABS) / PA
- polyfluorure de vinylidène (PVDF) / polyoléfine
- PVDF / caoutchouc poly(éthylène / propylène)
et en ce que le mélange C et D est choisi dans le second groupe comprenant :
- PVC / ABS
- PVC / poly(styrène / acrylonitrile greffé sur polymère acrylique) (ASA)
- PVC / poly(méthacrylate de méthyle) (PMMA)
- PVC / polyuréthanne
- ABS / poly(styrène / acrylonitrile) (SAN)
- ABS / poly(styrène / anhydride maléique) (SMA)
- ABS / PA
- poly(2,6-diméthyl-1,4-phénylène éther) (PPE) / polystyrène
- PPE / PA
- PPE / polyoléfine
- polyoléfine chlorée / polyester aliphatique
- polyétherimide / polyéthercétone (PEK) ou polyétheréthercétone (PEEK)
- polysulfure ou polyéthersulfure / ABS, PET ou PBT (polyéthylène ou polybutylène téréphtalate)
- PVDF / PMMA
le mélange C et D constituant un système de compatibilisation des deux polymères immiscibles A et B.

Dans ce qui suit, on mentionnera les "polymères C et D", étant précisé que cette expression désigne aussi bien les homo- que les copolymères et s'étend à des mélangés comprenant plus de deux polymères.

L'invention a également pour objet une composition comprenant les deux polymères A et B essentiellement immiscibles et le mélange stable des polymères C et D. Elle concerne tout particulièrement les compositions comprenant une matrice, une phase dispersée et le mélange C/D à l'interface matrice/phase dispersée. Les polymères A, B, C et D, pris séparément, sont, en général, des polymères monophasiques.

L'invention a encore pour objet les articles obtenus par mise en oeuvre des compositions décrits ci-avant.

Au sens de l'invention :
- par polymères immiscibles, on désigne des polymères dont le mélange à l'état amorphe, en fusion ou en solution dans un solvant commun aux polymères est thermodynamiquement instable, c'est-à-dire que l'énergie libre du mélange est supérieure à la valeur combinée de celle des polymères constituant ce mélange en d'autres termes l'énergie de ΔGₘᵢₓ est positive.
   A contrario, les polymères miscibles ou partiellement miscibles conduisent, dans les mêmes conditions, à un mélange thermodynamiquement stable, pour lequel l'énergie de ΔGₘᵢₓ est négative. Les polymères totalement miscibles conduisent à un système à une phase, alors que les polymères partiellement miscibles donnent un système biphasique à très faible énergie interfaciale se traduisant par l'existence d'une dispersion très fine d'un polymère au sein de l'autre.
- par mélange stable, on désigne un couple de polymères C et D tel que la tension interfaciale δ_{CD} qui est égale à δ_{C} + δ_{D} - Wₐ (où δ_{C} + δ_{D} sont les tensions superficielles de polymères C ou D et Wₐ est l'effort d'adhésion c'est-à-dire l'énergie libre Gibbs nécessaire pour former un interface entre les polymères C et D) est aussi faible que possible et, de préférence, voisine de 0 et au plus égale à 10 mN/m.
   L'invention a donc pour objet un système constitué par un mélange stable C/D, au sens défini ci-avant, utilisable pour compatibiliser des polymères A et B essentiellement immiscibles entre eux au sens donné plus haut. II ressort de ce qui précède que, au niveau de chaque couple polymère A ou B et constituant C ou D du mélange stable C/D, on observera une compatibilisation par l'un au moins des processus suivants de diminution de la tension interfaciale :
- dissolution du constituant du mélange stable dans le polymère concerné,
- formation de réseaux interpénétrés,
- cocristallisation,
- attraction ou liaisons ioniques, liaisons de van der Wals ou tout autre moyen permettant de réduire la tension interfaciale entre les polymères A et B et le mélange C/D.

D'une manière générale, tout mélange stable dont chacun des constituants est susceptible de réduire la teneur superficielle entre lui-même et le polymère A (ou B) par création de liaison covalente, réticulation, formation de réseaux interpénétrés, co-cristallisation ou liaison ionique, constitue un système de compatibilisation au sens de l'invention.

A titre d'exemples spécifiques de tels systèmes, on peut citer :
- le mélange polyéthylène chloré / polyester aliphatique insaturé pour "compatibiliser" les couples PVDF ou ses copolymères / polyéthylène, ou PVDF / caoutchouc éthylène / propylène,
- le même mélange pour "compatibiliser" les couples ci-dessus dans lequel le PVDF est remplacé par le PVF3 (polytrifluoroéthylène), le PVC, le PVCC (PVC chloré),
- le même mélange pour "compatibiliser" le couple PVDF/PP.

Parmi les polyesters aliphatiques insaturés mentionnés ci-avant, on citera tout particulièrement les polyesters choisis parmi les polylactones tels que la polycaprolactone, la polypivalolactone, la polyoenantholactone ou la polycaprilolactone. Ces polyesters peuvent être utilisés tels que ou après greffage, de tels polymères greffés étant décrits par exemple dans la demande de brevet français 94.13368 dont le contenu est incorporé par référence.

Les autres polymères ou copolymères constituant aussi bien les polymères A ou B que les mélanges C/D sont décrits dans la littérature et ces polymères ou copolymères pas plus que leur procédé d'obtention ne constituent un objet de l'invention.

D'une manière générale, les systèmes de compatibilisation conformes à l'invention sont mis en oeuvre en quantité représentant d'environ 1 à environ 20 % du poids de l'ensemble polymère A+ polymère B. Dans ces compositions et dans les produits conformes en résultant, les proportions des polymères A et B peuvent, en général, varier très largement, chacun des polymères pouvant devenir soit matrice soit phase dispersée. A titre indicatif, le rapport pondéral A/B peut aller de 1/5 à 5/1. Dans le mélange stable C/D le rapport pondéral C/D peut, d'une manière générale, aller de 1/10 à 10/1.

La préparation des compositions A, B+ C/D peut se faire en solution. Cependant, et notamment au stade industriel, cette préparation a généralement lieu à l'état fondu, en discontinu ou en continu sur des machines d'extrusion couramment utilisées. On peut, selon une variante, "pré-mélanger" les quatre constituants à froid avant de les introduire dans l'extrudeuse. Selon une autre variante, on peut extruder en premier lieu le mélange C/D puis introduire ce mélange dans une extrudeuse en même temps que les polymères A et B.

La température de l'extrusion est fonction notamment des points de fusion des différents polymères A, B, C et D.

D'une manière générale, elle est supérieure d'au moins 20 °C au point de fusion du constituant ayant le point de fusion le plus élevé.

Les articles obtenus par extrusion des compositions conformes à l'invention présentent en général une phase continue et une phase dispersée sous forme de nodules dont le diamètre moyen est en général compris entre 0,1 et 5 µm et, de préférence, entre 0,2 et 3 µm.

L'utilisation des "mélanges stables" permet d'une manière générale d'obtenir d'excellentes propriétés mécaniques, très supérieures à celles qu'on peut obtenir non seulement si on opère sans "mélange" mais également si on opère avec un seul des constituants de ce mélange, ainsi qu'il apparaîtra à la lecture des exemples qui suivent et ne sont donnés qu'à titre d'illustration.

Les exemples suivants illustrent l'invention :

### Exemples 1 à 19 et témoins.

a/ Dans ces exemples, on utilise les extrudeuses suivantes :
   - Extrudeuse Werner ZSK 30 [E1]
      . vis de Ø 30 mm
      . longueur de machine : 36 diamètres
      . refroidissement des joncs par bac à eau
   - Extrudeuse monovis biétagée Kaufman [E2]
      . 1° étage : vis de Ø 50 mm et longueur 18 Ø
      . 2° étage : vis de Ø 50 mm et longueur 13 Ø
      . refroidissement des joncs par bac à eau
   - Malaxeur BUSS PR 46/70 11 D [E3]
      . malaxeur : vis de Ø 46 mm et longueur 11 Ø
      . extrudeuse de reprise : vis de Ø 70 mm et longueur 3,5 Ø
      . refroidissement de joncs par bac à eau
   - Extrudeuse Bivis Werner ZSK 40 [E4]
      . vis de Ø 40 mm
      . longueur de machine 40 Ø
      . refroidissement des joncs par bac à eau

      Pour toutes ces extrudeuses, l'extrusion est mise en oeuvre avec des températures matière comprises entre 185 et 230 °C.
b/ Les polymères utilisés, soit en tant que polymères A et B soit en tant que polymères C et D (au sens donné plus haut) sont les suivants :
   A1 - Le PEHD LACQTENE® 2040 ML 55 est un PEHD de densité 0,955 g/cm³ et de fluidité 4 g/10 min à 190 °C sous 2,16 kg (norme ISO 1133).
   A2 - Le PEHD LACQTENE® 2003 SN 53 est un PEHD de densité 0,953 g/cm³ et de fluidité 0,3 g/10 min à 190 °C sous 2,16 kg (norme ISO 1133).
   A3 - L'EPR VM23 est un concentré d'EPR dilué dans une polyoléfine, de densité 0,89 g/cm³ et de fluidité 0,6 g/10 min à 230° C sous 2,16 kg et 2,4 g/10 min à 230 °C sous 5 kg (norme ISO 1133).
   B1 - Le PVDF KYNAR 6000 HD® est un homopolymère de fluorure de vinylidène (VF2) de fluidité 13 g/10 min à 230° C sous 5 kg (norme ISO 1133).
   B2 - Le PVDF KYNAR 15000 HD® est un homopolymère de VF2 de fluidité 30 g/10 min à 230° C sous 5 kg (norme ISO 1133).
   C1 - La PCL (poly ε-caprolactone) CAPA 680® est caractérisée par une viscosité de fusion à 190° C supérieure à 1000 Pa.s à un cisaillement de 10 s⁻¹ et supérieure à 300 Pa.s à un cisaillement de 1000 s⁻¹.
   C2 - PCL CAPA 680® greffé par du méthacrylate de glycidyle (GMA) (teneur en GMA : 1,2 %).
   D1 - Le PECI (polyéthylène chloré) à 25 % TYRIN CM674® est caractérisé par une densité de 1,10 g/cm³.
   D2 - Le PECI à 40 % TYRIN BH9000® est caractérisé par une densité de 1,20 g/cm³.

Dans les exemples 5 et 6, le PCL ou la PECI ont été extrudés préalablement sur une extrudeuse monovis de type FAIREX (vis de Ø 45 mm et de longueur = 26 Ø) puis ajoutés au PEHD et au PVDF (mélange ternaire) au moment de l'extrusion sur extrudeuse E1.

Dans les autres exemples, les quatre polymères sont prémélangés puis introduits directement en entrée de l'extrudeuse.

Avec les mélanges obtenus à l'aide des différentes extrudeuses, on réalise des barreaux de flexion et des éprouvettes de traction à l'aide d'une presse à injecter à des températures matière comprises entre 210 et 230 °C.

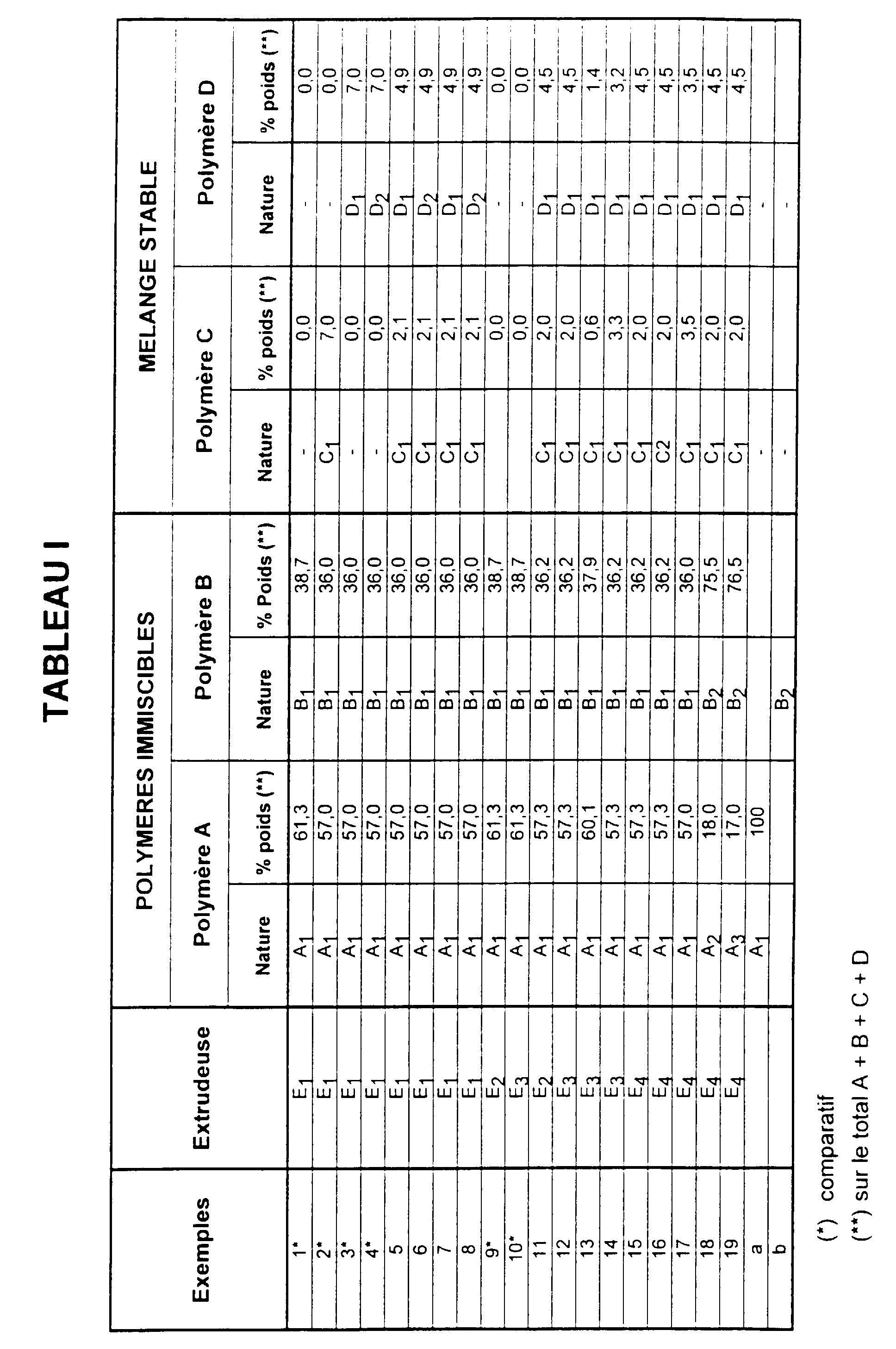

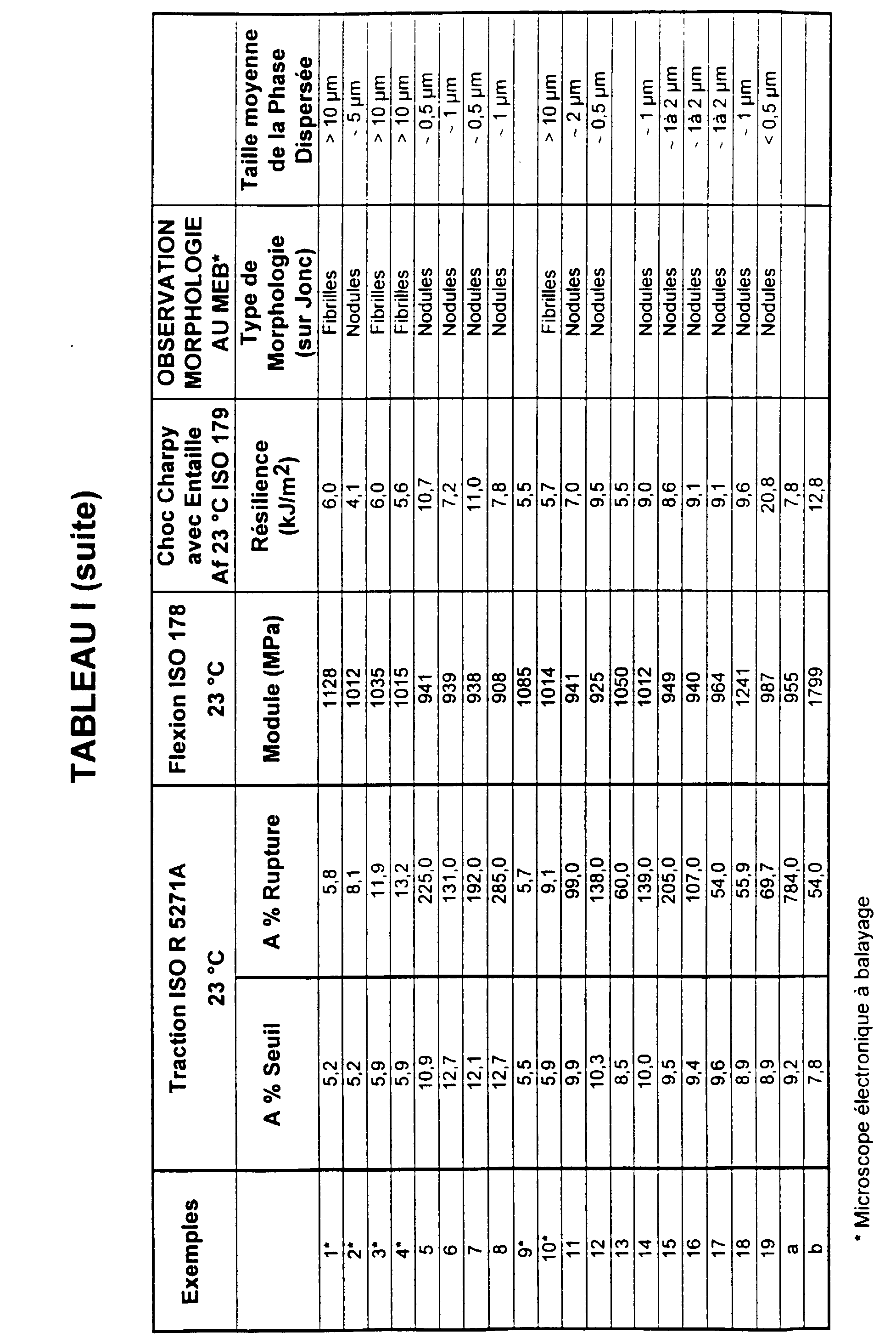

La lecture du tableau 1 appelle les commentaires suivants :
- Les exemples 1, 9 et 10 montrent qu'en l'absence d'agent compatibilisant, l'association des polymères A et B conduit à :
   - une morphologie grossière de la phase dispersée (fibrille)
   - un faible allongement au seuil et à la rupture
   - une faible résilience par rapport à la matrice PE pure (ligne a)
- Les exemples 2, 3 et 4 montrent que si on utilise l'un seulement des éléments du mélange PECI/PCL comme compatibilisant le résultat reste mauvais :
   - morphologie grossière
   - faible allongement à la rupture
   - faible résilience
- Les exemples 5, 6, 7 et 8, 11, 12, 13, 14, 15 et 16 conduisent à une association A et B de bonne qualité :
   - morphophologie nodulaire fine
   - allongement au seuil amélioré (de 5 % à 10-12 %) [par rapport aux exemples 1 à 4 et 9-10]
   - mais surtout allongement à la rupture fortement amélioré (de 6 % à 100-250 %) [par rapport aux exemples 1 à 4 et 9-10]
   - résilience au moins égale à celle de la matrice PE (ligne a)
- Les exemples 18 et 19 sont à matrice fluorée.

### Exemples 20 à 26 et témoins.

a/ Dans ces exemples, on utilise une extrudeuse Werner ZSK 40 telle que définie précédemment ; les températures matière lors de l'extrusion sont comprises entre 185 et 230 °C.
b/ Les polymères utilisés, soit en tant que polymères A et B soit en tant que polymères C et D (au sens donné plus haut) sont les suivants :
   A2 A3 B1 C1 D1 tels que définis précédemment.
   A4 - Le PEHD LACQTENE® 2008 SN 60 est un PEHD de densité 0,960 g/cm³ et de fluidité 0,8 g/10 min à 190 °C sous 2,16 kg (norme ISO 1133).
   A5- L' ENGAGE EG® 8100 est un VLDPE obtenu par catalyse métallocène de densité 0,87 g/cm³ et de fluidité 1,0 g/10 min à 190° C sous 2,16 kg (norme ISO 1133) et contenant 24 % en poids d'octène en tant que comonomère.
   A6 - Le KRATON G1651® 2003 SN 53 est un copolymère à blocs styrénique de type styrène/éthylène/butène/styrène (SEBS) dont le rapport massique styrène/(éthylène+butène) est de 32/68 de densité 0,91 g/cm³.
   B3 - Le PVDF KYNAR 710® est un homopolymère de VF2 de fluidité 37 g/10 min à 230° C sous 5 kg (norme ISO 1133).
   B4 - Le PVDF KYNARFLEX 2850 EF® est un copolymère de VF2 et d'hexafluoropropylène (HFP) de fluidité 11 g/10 min à 230° C sous 5 kg (norme ISO 1133) et de module de flexion à 23 °C compris entre 950 et 1.150 MPa (norme ISO 178).

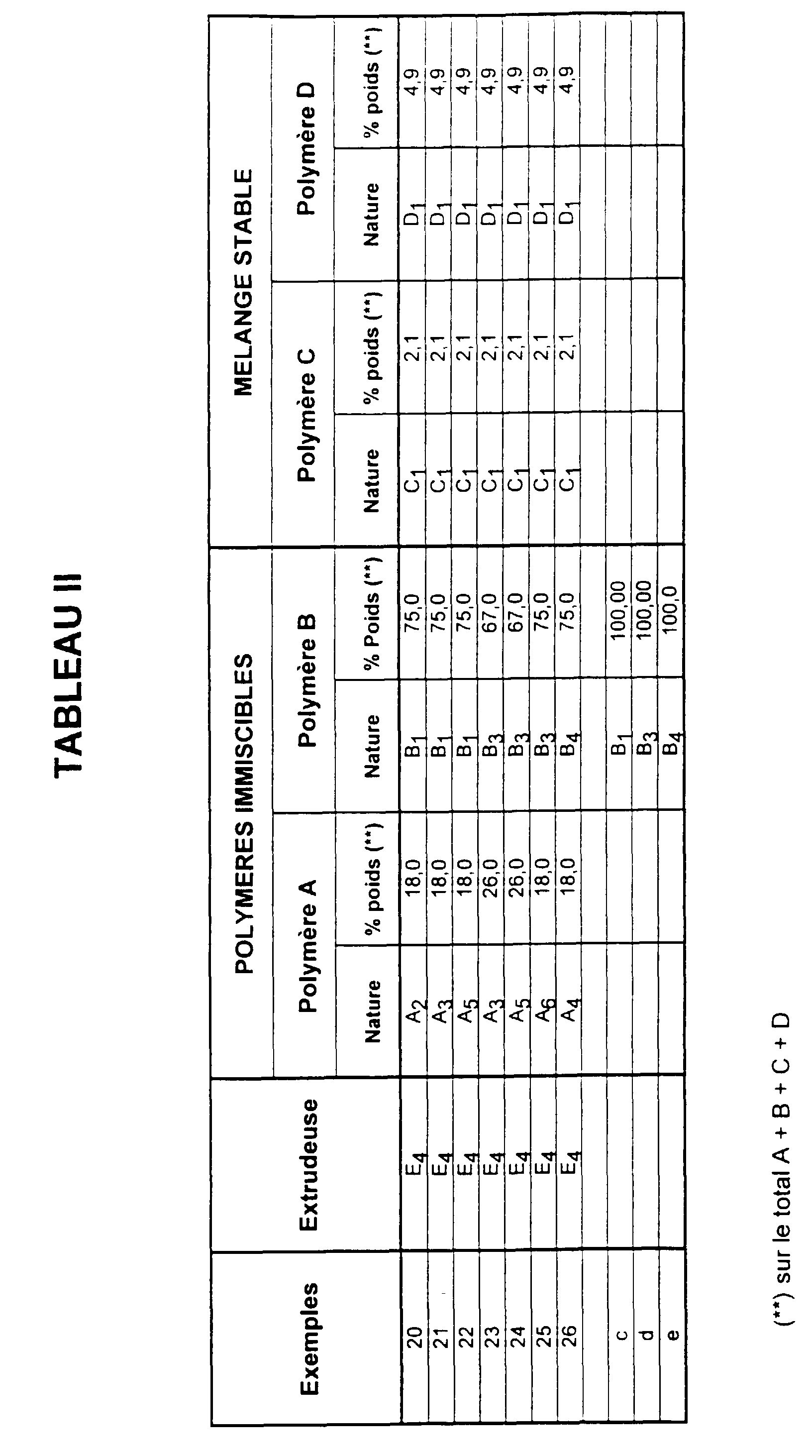

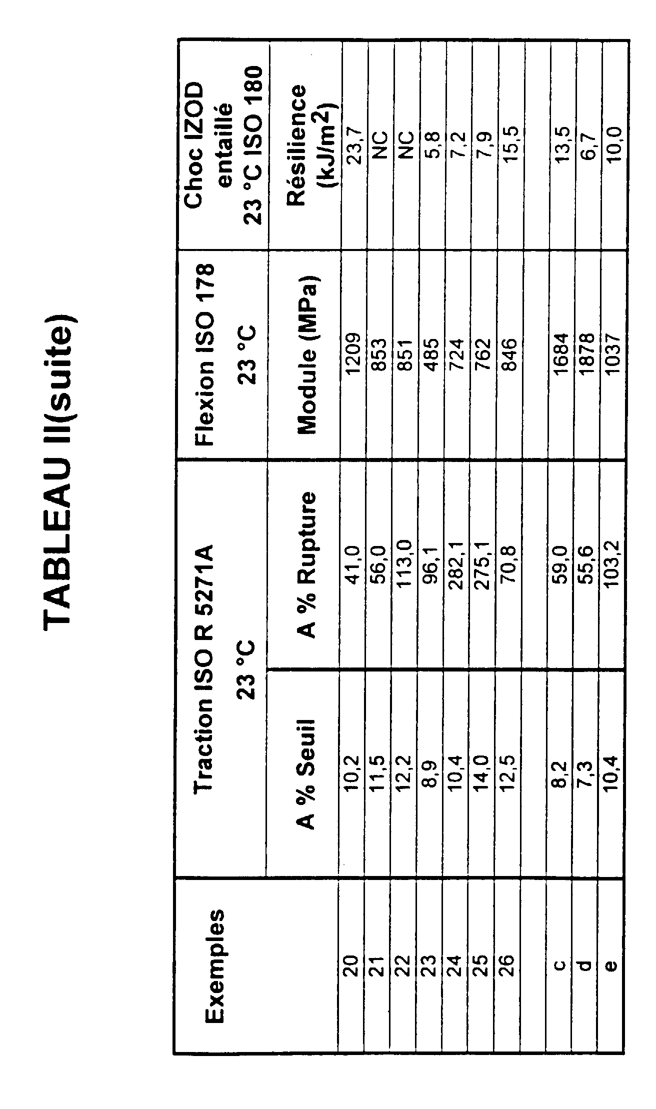

La lecture du tableau 2 appelle les commentaires suivants :
- Les exemples 21 à 23 conduisent à une association A et B de bonne qualité, et notamment :
   - résilience améliorée par rapport à celle de la matrice PVDF (ligne c).
- Les exemples 24 à 26 conduisent à une association A et B de bonne qualité, et notamment :
   - allongements au seuil et à la rupture fortement améliorés par rapport à ceux de la matrice PVDF (ligne d)
- L'exemple 26 conduit à une association A et B de bonne qualité :
   - résilience améliorée par rapport à celle de la matrice PVDF (ligne e).

## Revendications

1. Composition comprenant deux polymères A et B thermoplastiques immiscibles l'un avec l'autre et un mélange de deux polymères thermoplastiques C et D, chacun de ces polymères C et D étant individuellement au moins partiellement miscible avec l'un des polymères A et B, caractérisée en ce que les polymères A et B sont choisis dans le premier groupe comprenant les couples suivants :
- polyéthylène (PE) / polyamide (PA)
- polyéthylène / polyisobutène
- polypropylène (PP) / autre polyoléfine
- PP / PA
- polychlorure de vinyle (PVC) / polyoléfine
- poly(acrylonitrile / butadiène / styrène) (ABS) / PA
- polyfluorure de vinylidène (PVDF) / polyoléfine
- PVDF / caoutchouc poly(éthylène / propylène)
et en ce que le mélange C et D est choisi dans le second groupe comprenant
- PVC / ABS
- PVC / poly(styrène / acrylonitrile greffé sur polymère acrylique) (ASA)
- PVC / poly(méthacrylate de méthyle) (PMMA)
- PVC / polyuréthanne
- ABS / poly(styrène / acrylonitrile) (SAN)
- ABS / poly(styrène / anhydride maléique) (SMA)
- ABS / PA
- poly(2,6-diméthyl-1,4-phénylène éther) (PPE) / polystyrène
- PPE / PA
- PPE / polyoléfine
- polyoléfine chlorée / polyester aliphatique
- polyétherimide / polyéthercétone (PEK) ou polyétheréthercétone (PEEK)
- polysulfure ou polyéthersulfure / ABS, PET ou PBT (polyéthylène ou polybutylène téréphtalate)
- PVDF / PMMA
le mélange C et D constituant un système de compatibilisation des deux polymères immiscibles A et B.

2. Composition selon la revendication 1, caractérisée en ce que le mélange C et D a une tension interfaciale (δCD) voisine de 0 et au plus égale à 10 mN/m.

3. Composition selon l'une des revendications 1 à 2, caractérisée en ce que le rapport pondéral polymère A / polymère B est de 1/5 à 5/1.

4. Composition selon l'une des revendications 1 à 3, caractérisée en ce que le rapport pondéral polymère C / polymère D est de 1/10 à 10/1.

5. Composition selon l'une des revendications 1 à 4, caractérisée en ce que le rapport pondéral de C et D / A et B est de 1/100 à 20/100.

6. Articles obtenus à partir des compositions selon l'une des revendications 1 à 5.

## Patentansprüche

1. Zusammensetzung, die zwei miteinander nicht mischbare Polymere A und B und ein Gemisch aus zwei thermoplastischen Polymeren C und D enthält, wobei jedes dieser Polymere C und D einzeln mindestens teilweise mit einem der Polymere A und B mischbar ist,
dadurch gekennzeichnet, daß
die Polymere A und B aus einer ersten Gruppe ausgewählt sind, die die folgenden Materialpaare enthält:
- Polyethylen (PE) / Polyamid (PA),
- Polyethylen / Polyisobuten,
- Polypropylen (PP) / anderes Polyolefin,
- PP / PA,
- Polyvinylchlorid (PVC) / Polyolefin,
- Acrylnitril-Butadien-Styrol-Copolymere (ABS) / PA
- Polyvinylidenfluorid (PVDF) / Polyolefin,
- PVDF / Ethylen-Propylen-Copolymer-Kautschuk,
und daß das Gemisch aus C und D aus einer zweiten Gruppe ausgewählt ist, die umfaßt:
- PVC / ABS,
- PVC / Copolymer aus Styrol und Acrylnitril, das auf ein Acrylpolymer gepfropft ist (ASA),
- PVC / Polymethylmethacrylat (PMMA),
- PVC / Polyurethan,
- ABS / Styrol-Acrylnitril-Copolymer (SAN),
- ABS / Copolymer aus Styrol und Maleinsäureanhydrid (SMA),
- ABS / PA,
- Poly(2,6-dimethyl-1,4-phenylenether) (PPE) / Polystyrol,
- PPE / PA,
- PPE / Polyolefin,
- chlorhaltiges Polyolefin / aliphatischer Polyester,
- Polyetherimid / Polyetherketon (PEK) oder Polyetheretherketon (PEEK),
- Polysulfid oder Polyethersulfid / ABS, PET oder PBT (Polyethylenterephthalat oder Polybutylenterephthalat),
- PVDF / PMMA,
wobei das Gemisch aus C und D ein Kompatibilisierungssystem für die beiden nicht mischbaren Polymere A und B bildet.

2. Zusammensetzung nach Anspruch 1, dadurch gekennzeichnet, daß das Gemisch aus C und D eine Grenzflächenspannung (δCD) von etwa 0 und höchstens 10 mN/m aufweist.

3. Zusammensetzung nach einem der Ansprüche 1 und 2, dadurch gekennzeichnet, daß das Gewichtsverhältnis Polymer A/Polymer B 1/5 bis 5/1 beträgt.

4. Zusammensetzung nach einem der Ansprüche 1 bis 3, dadurch gekennzeichnet, daß das Gewichtsverhältnis Polymer C/Polymer D 1/10 bis 10/1 beträgt.

5. Zusammensetzung nach einem der Ansprüche 1 bis 4, dadurch gekennzeichnet, daß das Gewichtsverhältnis von C und D zu A und B 1/100 bis 20/100 beträgt.

6. Gegenstände, die aus den Zusammensetzungen nach einem der Ansprüche 1 bis 5 erhältlich sind.

## Claims

1. Composition comprising two thermoplastic polymers A and B which are immiscible with each other and a mixture of two thermoplastic polymers C and D, each of these polymers C and D individually being at least partially miscible with one of the polymers A and B, characterized in that the polymers A and B are chosen from the first group comprising the following couples:
- polyethylene (PE)/polyamide (PA)
- polyethylene/polyisobutene
- polypropylene (PP)/other polyolefin
- PP/PA
- polyvinyl chloride (PVC)/polyolefin
- poly(acrylonitrile/butadiene/styrene)(ABS)/PA
- polyvinylidene fluoride (PVDF)/polyolefin
- PVDF/rubber poly(ethylene/propylene)
and in that the mixture C and D is chosen from the second group comprising:
- PVC/ABS
- PVC/poly(styrene/acrylonitrile grafted onto acrylic polymer) (ASA)
- PVC/poly(methyl methacrylate) (PMMA)
- PVC/polyurethane
- ABS/poly(styrene/acrylonitrile) (SAN)
- ABS/poly(styrene/maleic anhydride) (SMA)
- ABS/PA
- poly(2,6-dimethyl-l,4-phenylene ether) (PPE)/ polystyrene
- PPE/PA
- PPE/polyolefin
- chlorinated polyolefin/aliphatic polyester
- polyetherimide/polyetherketone (PEK) or polyetheretherketone (PEEK)
- polysulphide or polyethersulphide/ABS, PET or PBT (polyethylene or polybutylene terephthalate)
- PVDF/PMMA
the mixture C and D constituting a system for compatibilizing the two immiscible polymers A and B.

2. Composition according to Claim 1, characterized in that the mixture C and D has an interfacial tension (δCD) close to 0 and at most equal to 10 mN/m.

3. Composition according to either of Claims 1 and 2, characterized in that the polymer A/polymer B weight ratio is from 1/5 to 5/1.

4. Composition according to one of Claims 1 to 3, charaterized in that the polymer C/polymer D weight ratio is from 1/10 to 10/1.

5. Composition according to one of Claims 1 to 4, characterized in that the C and D/A and B weight ratio is from 1/100 to 20/100.

6. Articles obtained from compositions according to one of Claims 1 to 5.
